# EUROPEAN PATENT SPECIFICATION

(11) **EP 2 923 054 B1**
(45) Date of publication and mention of the grant of the patent: **01.03.2017**
(21) Application number: 13857341.5
(22) Date of filing: 02.10.2013
(51) Int. Cl.: F02C 7/14, B32B 1/08, F02K 3/00, C23C 18/16, C25D 1/02, B32B 15/08, B32B 27/28, C25D 7/04, C25D 5/56, F16L 9/12, B29C 70/06, C25D 5/02

(54) **TURBINE ENGINE DUCT**
LEITUNG EINES TURBINENMOTORS
CONDUIT DE MOTEUR DE TURBINE

(30) Priority: 20.11.2012 US 201213682048
(43) Date of publication of application: 30.09.2015
(73) Proprietor: United Technologies Corporation, Farmington, CT 06032 (US)
(72) Inventor: COOK III, Grant, O., Tolland, CT 06084 (US)
(74) Representative: Leckey, David Herbert
(86) International application number: PCT/US2013/063050
(87) International publication number: WO 2014/081509

(56) References cited:
- DE-A1-102008 026 952
- US-A- 3 856 172
- US-A1- 2007 178 283
- US-A1- 2008 178 995
- US-A1- 2009 133 347
- US-A1- 2009 133 347
- US-A1- 2010 199 677
- US-A1- 2010 304 063
- US-A1- 2012 042 981
- US-B2- 8 273 430

## Description

### BACKGROUND

The disclosure relates to gas turbine engines. More particularly, the disclosure relates to fluid ducts.

In an exemplary gas turbine engine, ducting can be fabricated using a variety of processes, such as a composite layup or forming a sheet metal to the desired shape using a combination of cutting, bending, welding, and/or stamping processes. US8273430B2 discloses an alternative in which ducting is formed of a metallic inner layer and a polymeric outer layer by a stamping process.

DE 10 2008 026 952 A1 discloses a composite article having a plastic layer and a nickel layer formed thereon. US 2010/0304063 A1 discloses a metal-coated polymer article.

### SUMMARY

The present invention provides a turbine engine duct as set forth in claim 1.

In an embodiment of the foregoing embodiment, the coating system comprises the polymeric coating atop the metallic plating along a majority of an interior surface area; and along a majority of an exterior surface area, the coating system comprises the metallic plating without the polymeric coating.

In further embodiments of any of the foregoing embodiments, the matrix is a thermoplastic material forming a majority of the substrate by weight.

In further embodiments of any of the foregoing embodiments, the substrate has a thickness of 1.27-6.35mm.

In further embodiments of any of the foregoing embodiments, the metallic plating forms at least 30% by weight of the article.

In further embodiments of any of the foregoing embodiments, the metallic plating comprises nickel as a largest by-weight content.

In further embodiments of any of the foregoing embodiments, the metallic plating has a thickness of at least 0.25mm.

In further embodiments of any of the foregoing embodiments, the polymeric coating has a thickness of 0.5-2.0mm.

In further embodiments of any of the foregoing embodiments, the turbine engine duct is at least one of: an air oil cooler inlet duct; an air oil cooler outlet duct; a precooler inlet duct; and an active clearance control inlet duct.

In further embodiments of any of the foregoing embodiments, a gas turbine engine has: a compressor section; a combustor downstream of the compressor section along a core flowpath; a turbine section downstream of the combustor along the core flowpath and coupled to the compressor section to drive the compressor section and the duct as an air duct.

The details of one or more embodiments are set forth in the accompanying drawings and the description below. Other features, objects, and advantages will be apparent from the description and drawings, and from the claims.

### BRIEF DESCRIPTION OF THE DRAWINGS

FIG. 1 is a partially schematic axial sectional view of a gas turbine engine.
FIG. 2 is a partially schematic left side view of the engine with aerodynamic structures removed.
FIG. 3 is a partially schematic right side view of the engine with aerodynamic structures removed.
FIG. 4 is a view of a first duct of the engine of FIG. 1.
FIG. 5 is a cross-sectional view of the duct of FIG. 4.
FIG. 6 is a view of a second duct.
FIG. 7 is a view of a third duct.
FIG. 8 is a view of a fourth duct.

Like reference numbers and designations in the various drawings indicate like elements.

### DETAILED DESCRIPTION

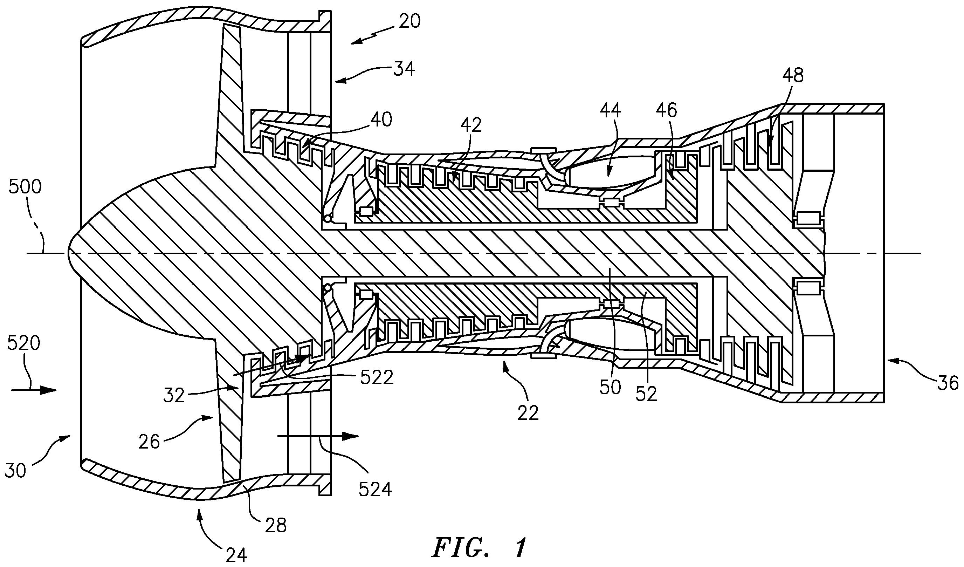

FIG. 1 shows a gas turbine engine 20 having an engine case 22 surrounding a centerline or central longitudinal axis 500. An exemplary gas turbine engine is a turbofan engine having a fan section 24 including a fan 26 within a fan case 28. The exemplary engine includes an inlet 30 at an upstream end of the fan case receiving an inlet flow along an inlet flowpath 520. The fan 26 has one or more stages of fan blades 32. Downstream of the fan blades, the flowpath 520 splits into an inboard portion 522 being a core flowpath and passing through a core of the engine and an outboard portion 524 being a bypass flowpath exiting an outlet 34 of the fan case.

The core flowpath 522 proceeds downstream to an engine outlet 36 through one or more compressor sections, a combustor, and one or more turbine sections. The exemplary engine has two axial compressor sections and two axial turbine sections, although other configurations are equally applicable. From upstream to downstream there is a low pressure compressor section (LPC) 40, a high pressure compressor section (HPC) 42, a combustor section 44, a high pressure turbine section (HPT) 46, and a low pressure turbine section (LPT) 48. Each of the LPC, HPC, HPT, and LPT comprises one or more stages of blades which may be interspersed with one or more stages of stator vanes.

In the exemplary engine, the blade stages of the LPC and LPT are part of a low pressure spool mounted for rotation about the axis 500. The exemplary low pressure spool includes a shaft (low pressure shaft) 50 which couples the blade stages of the LPT to those of the LPC and allows the LPT to drive rotation of the LPC. In the exemplary engine, the shaft 50 also directly drives the fan. In alternative implementations, the fan may be driven via a transmission (e.g., a fan gear drive system such as an epicyclic transmission between the fan and the low pressure spool) to allow the fan to rotate at a lower speed than the low pressure shaft. Also, although shown as an axial two-spool engine, other spool counts and configurations may be used.

The exemplary engine further includes a high pressure shaft 52 mounted for rotation about the axis 500 and coupling the blade stages of the HPT to those of the HPC to allow the HPT to drive rotation of the HPC. In the combustor 44, fuel is introduced to compressed air from the HPC and combusted to produce a high pressure gas which, in turn, is expanded in the turbine sections to extract energy and drive rotation of the respective turbine sections and their associated compressor sections (to provide the compressed air to the combustor) and fan.

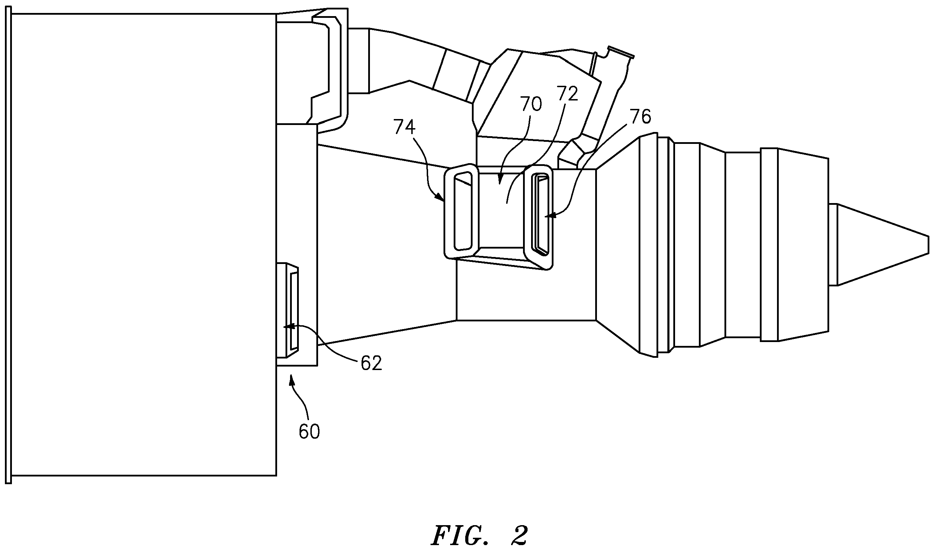

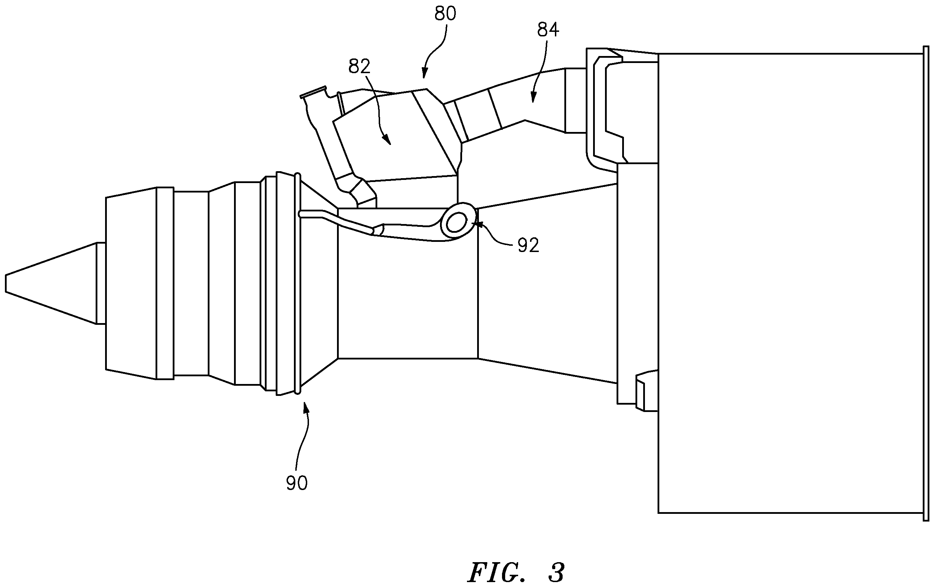

FIGS. 2 and 3 are, respectively, left and right side views of the engine with aerodynamic exterior surface panels removed. FIGS. 2 and 3 show various ducts of systems which may be made according to the present disclosure. The exemplary systems include a variable frequency generator (VFG) system 60 which includes a combined inlet fairing and flow guide 62. The variable frequency generator (VFG) is an electrical power generator powered by an input shaft that is driven by the main engine (e.g., its gearbox). This generator creates heat and is cooled by flowing oil though a pair of heat exchangers. These heat exchangers have air directed into them by the VFG heat exchanger (HEX) inlet fairing, which is in the bypass (fan air) flow path acting as a scoop. The heat exchanger may be partially enclosed by the fairing. The fairing may represent a baseline metallic or composite article replaced by a novel article.

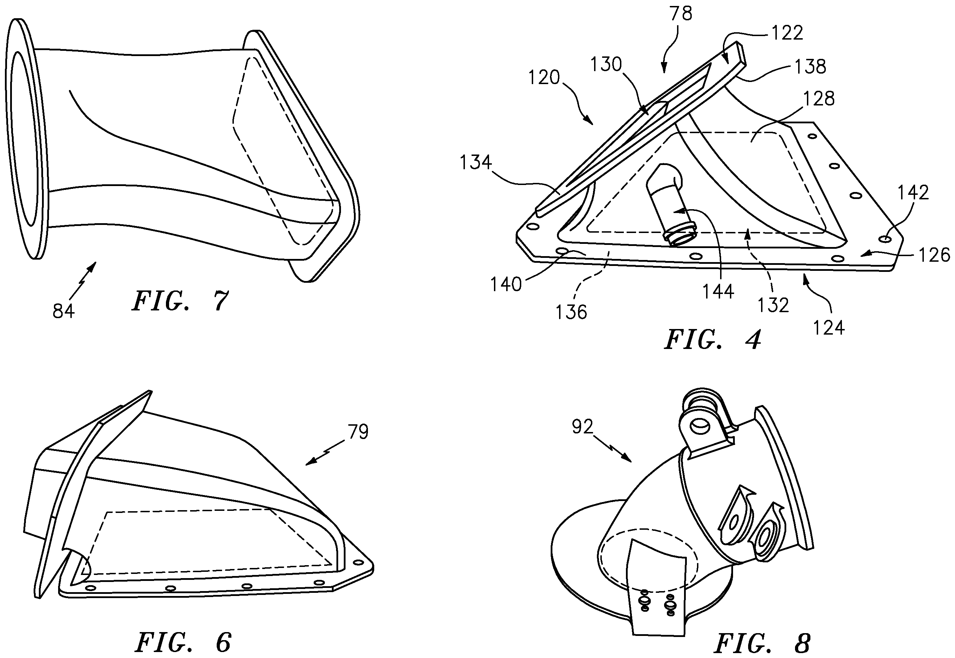

FIG. 2 further includes an air-oil cooler (AOC) system 70 including an air-oil heat exchanger unit 72. An air inlet duct (AOC inlet duct) 78 (FIG. 4) connects to an inlet 74 to guide air to the heat exchanger 72 and an air outlet duct (AOC exhaust duct) 79 (FIG. 6) connects to an outlet 76 to guide air from the heat exchanger. The air-oil cooler system serves to cool engine oil via a diversion of bypass air. As is discussed further below, either of the ducts 78 and 79 may reflect a baseline metallic or composite duct replaced by a new duct.

FIG. 3 further includes a precooler system 80. The precooler system includes a heat exchanger unit 82 used to cool a compressor bleed air stream by a diversion of the bypass flow. A precooler inlet duct 84 guides the bypass flow diversion to the heat exchanger. The precooler and the duct 84 may reflect a baseline metallic or composite component replaced by a novel component.

FIG. 3 further shows a turbine section active clearance control (ACC) system 90 which also draws a portion of bypass air to pneumatically actuate blade outer air seal segments to control clearance. The ACC system 90 includes an inlet duct 92. The inlet duct 92 may represent a baseline metallic or composite article replaced by a novel article.

FIGS. 4-8 show various of the aforementioned ducts. The exemplary articles are gas turbine engine ducts. An exemplary duct is an air duct for a gas turbine engine. The exemplary duct comprises a polymeric substrate and a metallic layer and replaces a metallic (e.g., formed sheet metal) or composite layup baseline part.

FIG. 4 shows the AOC inlet duct 78. The exemplary duct 78 extends from an inlet end 120 formed at a flange 122 to an outlet end 124 formed at a flange 126.

The duct 78 includes a sidewall 128 defining a conduit extending between the flanges 122 and 126 and cooperating therewith to define respective inlet and outlet ports 130 and 132 at openings in the flanges.

Each of the exemplary flanges 122 and 126 has a front (mounting) face 134, 136 and a rear face 138, 140.

One or both of the exemplary flanges may include mounting holes 142. Additionally, the duct may include ports and/or integral fittings (of which an exemplary integral fitting 144 is shown) and/or further mounting features.

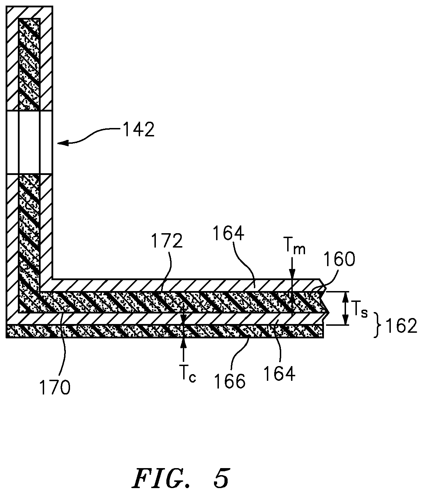

The duct comprises a substrate 160 and a coating 162 (FIG. 5). The coating may include one or more layers. The layers include at least a metallic layer 164. One or more functional layers atop the metal layer may be of appropriate materials for functions such as wear resistance, heat resistance, environmental protection (e.g., chemical resistance), and the like. The one or more additional layers includes a polymeric layer 166. The exemplary substrate has a local sidewall structure having a first surface 170 and a second surface 172. The exemplary two-layer coating is on the first surface but not the second. The exemplary first surface forms an interior surface along the fluid flowpath (air flowpath) through the duct. The exemplary sidewall may be the sidewall of the AOC inlet duct or other duct discussed above. In this implementation, the exterior surface includes only the metallic layer 164. In this particular implementation, the metallic layer 164 covers substantially the entirety of the exterior of the substrate (e.g., perhaps omitting small features such as the inner diameter (ID) of mounting holes if the holes are machined after applying the metallic layer). In this particular implementation, the metallic layer is left exposed along the exterior of the duct when assembled to its associated components so as to present a flame-resistant exterior surface. Additionally, the exemplary metal area is exposed along the forward (mounting) face of the flange so as to provide precise mounting. However, alternative implementations might include the polymeric layer along the flange mounting face and further alternative implementations might include the polymer layer 166 along a portion of the exterior. As is discussed further below, the polymer coating 166 may impart damage resistance.

The exemplary substrate is an injection-molded or compression-molded piece formed of: at least one of polyetherimide (e.g., trademark ULTEM of SABIC Innovative Plastics Holding BV, Pittsfield, Massachusetts); thermoplastic polyimide (e.g., trademark EXTEM of SABIC Innovative Plastics Holding BV, Pittsfield, Massachusetts; or either of the foregoing as a matrix with fiber reinforcement e.g., carbon fiber or glass-fiber). An exemplary substrate comprises a single one of the forgoing as a by-weight majority (more particularly as just a single material and not in a block co-polymer).

In a particular example of an AOC inlet duct, or other embodiment, an initial precursor is molded by injection (or compression) molding using RTP 2185, a carbon-fiber-reinforced grade of ULTEM polyetherimide. The mold will include at least two retractable (or removable) inserts to achieve the desired angled internal flow path and mounting features (additionally or alternatively, some such features (e.g., flanges or bosses) may be bonded on using a suitable adhesive after molding but before plating to simplify the mold tooling). Holes for attachment (e.g., by bolt, rivets, etc.) are machined in the molded part (unless they were included in the mold tooling; however, there might be finish machining of molded holes or other features). It is preferable that no mold release, or comparable chemical agents, be used during the molding process to facilitate a strong bond between the plating and polymer (however, in certain instances, depending on mold release formulation and/or part requirements, a mold release could be used and/or a cleaning process may remove mold release residue).

Exemplary substrate thickness T_{S} is 0.05-0.2 inch (1.3-5mm, more particularly 2.0-4.0mm). The thickness may be a local thickness or a thickness over a majority of a surface area of the substrate or as a mean, median or modal value over the substrate. The substrate may be formed with various flanges, ribs, gussets, bosses and the like. These may cause substantial local departures in substrate thickness, coating gaps, etc.

The exemplary metallic layer 164 provides fire protection and imparts the principal strength of the article (as indicated by mechanical test results of representative test specimens or part cut-ups as compared to mechanical test results of the polymeric part with no or little plating). The exemplary metallic layer 164 also forms at least 30% by weight of the article, more particularly 40%-80% or 55%-70%.

Exemplary metal is nickel or by-weight majority nickel with an ultimate tensile strength of at least 60ksi (414MPa). Exemplary metal is applied by electroless plating, electroplating or electroforming (specifications for electroforming are sometimes more applicable to thick platings than electroplating specifications are) to a thickness T_{M} of 2-50 thousandths of an inch (0.05-1.3mm, more narrowly 0.25-1.0mm, or alternatively at least 0.25mm yet thinner than the substrate while still at least 0.05mm, or alternatively, at least 0.20mm). The thickness may be a local thickness or a thickness over a majority of a surface area (either of the substrate as a whole or of the plated portion of the substrate) or as a mean, median or modal value over the substrate as a whole or a plated portion thereof.

The molded precursor can be masked to provide localized areas that are unplated (e.g., that are not conductive, can be bonded using adhesives that are well-suited for polymers, and/or allow for outgassing of the polymer during high-temperature excursions), if desired, although the amount of masking should be minimal (to maximize strength and structural integrity). The plating material is typically pure Ni or a hardened Ni applied from a Ni sulfamate solution. Other plating materials, such as Ni-P or Ni-Co, can be applied to achieve certain results. Also, different plating solutions, such as Ni sulfate, can be used to deposit the plating resulting in a different set of properties. A typical plating for this application would be a low-stressed Ni plating (per AMS 2424) or a hardened Ni plating (per AMS 2423) applied using a Ni sulfamate bath.

In the example, plating is applied to internal passages and holes in the part, provided they are sufficiently large for the plating solution to deposit material. If desired, holes can be machined into the plated polymer structure to accommodate attachment, etc. rather than incorporating holes in the mold or machining them before plating.

In the particular example or other embodiment, there may be a post-plating cleaning/washing to remove any plating solution.

The exemplary polymer coating 166 protects the metal against impact or foreign object damage and environmental corrosion. The outer polymer coating may provide the first line of defense against nicks, dents, and scratches, helping to prolong part life by delaying damage to the plating that can eventually lead to crack initiation and propagation.

The exemplary polymer coating 166 is a PEEK coating (e.g., trademark VICOTE of Victrex plc., Lancashire, GB).

The polymer coating may be applied by spraying (e.g., thermal spray or electrostatic or dispersion spray) to a thickness of T_{C} of 0.1-2.0mm, more narrowly 0.25-1.0mm. The thickness may be a local thickness or a thickness over a majority of a surface area (either of the substrate as a whole or of the plated and coated portion of the substrate) or as a mean, median or modal value over the substrate as a whole or a plated and coated portion thereof.

If desired, the part can be masked before spraying to apply the polymer coating only in areas of interest. For example, the portions of the duct ultimately exposed to an external environment may be masked to leave the ultimate duct with exposed metal exterior for fire-resistance (e.g., only the internal passage of the duct will be coated).

Relative to a pure metal article, the composite may be easier to manufacture. Complex shapes might require complex machining, stamping/bending, welding, or other steps. In contrast, a polymeric part may be easier to mold in a convoluted shape. In addition, the polymer-metal composite part has a lower weight than a metal part of the same size and geometry. Further, in many cases, injection molding and conventional plating processes have lower unit costs than composite layups or metal forming, welding, etc. Also, the process may allow for simple modular changes by using a different polymer in the molding process and/or a different plating bath setup to achieve a range of desired properties.

Relative to a pure polymeric article or an article with only a thin metal layer, the composite may be thinner, thereby providing greater use flexibility where a thicker structure would not fit. Also the metal may increase resistance to particular impact or foreign object damage (FOD). Furthermore, the thicker plating provides structure that is capable of significantly higher loads, in excess of those typical of injection-molded polymers in the flow direction (best-case property, not achieved throughout a molded part). The thicker plating is also capable of maintaining part geometry while under load during a fire.

The AOC exhaust duct 79 of FIG. 6 has a generally similar construction to the AOC inlet duct 78. A collar-like boss protrudes centrally from the forward (mounting) face of the outlet flange. In such a situation, the two-layer coating may extend fully around this boss on both its inner and outer surfaces.

The precooler inlet duct 84 of FIG. 7 may also be similarly formed to the AOC inlet duct. The exemplary duct 84 includes a rounded-corner rectangular inlet flange and a circular outlet flange and port.

The ACC inlet duct 92 of FIG. 8 has inlet and outlet flanges which lack mounting holes. The exemplary outlet flange may be engaged by a clamping structure. FIG. 8 further shows several mounting features unitarily formed with the remainder of the structure and including a pair of clevises and a bracket. The two-layer coating may extend along these mounting features as well.

One or more embodiments have been described. Nevertheless, it will be understood that various modifications may be made. For example, when implemented as a replacement for a baseline part, details of the baseline may influence details of any particular implementation. Accordingly, other embodiments are within the scope of the following claims.

## Claims

1. A turbine engine duct comprising:
a first flange (122) having an opening (130);
a second flange (126) having an opening (132); and
a conduit (128) connecting the openings (130, 132), the duct (62; 78; 79; 84; 92) comprising:
a polymeric substrate (160); and
a coating system (162) comprising:
a metallic plating (164) having a thickness of at least 0.05mm; and
a polymeric coating (166) atop the metallic plating (164); wherein:
the coating system (162) comprises the polymeric coating (166) atop the metallic plating (164) along a majority of an interior surface area; and
along a majority of an exterior surface area, the coating system comprises the metallic plating (164) without the polymeric coating (166); and
wherein:
the substrate (160) comprises polyetherimide or thermoplastic polyimide; and
the polymeric coating comprises polyether ether ketone (PEEK).

2. The turbine engine duct of claim 1, wherein:
the substrate (160) comprises a polymeric matrix and a reinforcement; and
the matrix is a thermoplastic material forming a majority of the substrate by weight.

3. The turbine engine duct of claim 1 or 2, wherein:
the substrate (160) has a thickness of 1.27-6.35mm.

4. The turbine engine duct of any preceding claim, wherein:
the metallic plating (164) forms at least 30% by weight of the article.

5. The turbine engine duct of any preceding claim, wherein:
the metallic plating (164) comprises nickel as a largest by-weight content.

6. The turbine engine duct of any preceding claim, wherein:
the metallic plating (164) thickness is at least 0.25mm.

7. The turbine engine duct of any preceding claim, wherein:
the polymeric coating (166) has a thickness of 0.5-2.0mm.

8. The turbine engine duct of any preceding claim, being at least one of:
an air-oil cooler inlet duct (78);
an air-oil cooler outlet duct (79);
a precooler inlet duct (84); and
an active clearance control inlet duct (92).

9. A gas turbine engine (20) having:
a compressor section (40, 42);
a combustor (44) downstream of the compressor section (40,42) along a core flowpath (522); and
a turbine section (46, 48) downstream of the combustor (44) along the core flowpath (522) and coupled to the compressor section (40,42) to drive the compressor section (40,42),
wherein the engine comprises the turbine engine duct of any preceding claim as an air duct.

## Patentansprüche

1. Turbinenmotordurchgang, umfassend:
einen ersten Flansch (122) mit einer Öffnung (130);
einen zweiten Flansch (126) mit einer Öffnung (132); und
einen Kanal (128), der die Öffnungen (130, 132) verbindet, wobei der Durchgang (62; 78; 79; 84; 92) Folgendes umfasst:
ein Polymersubstrat (160); und
ein Beschichtungssystem (162), umfassend:
eine Metallplattierung (164) mit einer Dicke von wenigstens 0,05 mm; und
eine Polymerbeschichtung (166) über der Metallplattierung (164); wobei:
das Beschichtungssystem (162) die Polymerbeschichtung (166) über der Metallplattierung (164) entlang eines Hauptteils einer Innenfläche umfasst; und
das Beschichtungssystem entlang eines Hauptteils der Außenfläche die Metallplattierung (164) ohne die Polymerbeschichtung (166) umfasst; und
wobei:
das Substrat (160) Polyetherimid oder thermoplastisches Polyimid umfasst; und
die Polymerbeschichtung Polyetheretherketon (PEEK) umfasst.

2. Turbinenmotordurchgang nach Anspruch 1, wobei:
das Substrat (160) eine Polymermatrix und eine Verstärkung umfasst; und
die Matrix ein thermoplastisches Material ist, das einen Hauptteil des Substrats nach Gewicht bildet.

3. Turbinenmotordurchgang nach Anspruch 1 oder 2, wobei:
das Substrat (160) eine Dicke von 1,27 - 6,35 mm aufweist.

4. Turbinenmotordurchgang nach einem der vorangehenden Ansprüche, wobei:
die Metallplattierung (164) wenigstens 30 Gew.-% des Artikels bildet.

5. Turbinenmotordurchgang nach einem der vorangehenden Ansprüche, wobei:
die Metallplattierung (164) Nickel als einen höchsten Gehalt nach Gewicht umfasst.

6. Turbinenmotordurchgang nach einem der vorangehenden Ansprüche, wobei:
die Dicke der Metallplattierung (164) wenigstens 0,25 mm beträgt.

7. Turbinenmotordurchgang nach einem der vorangehenden Ansprüche, wobei:
die Polymerbeschichtung (166) eine Dicke von 0,5 - 2,0 mm aufweist.

8. Turbinenmotordurchgang nach einem der vorangehenden Ansprüche, der wenigstens einer der Folgenden ist:
ein Luft-Öl-Kühlereinlassdurchgang (78);
ein Luft-Öl-Kühlerauslassdurchgang (79);
ein Vorkühlereinlassdurchgang (84); und
ein Einlassdurchgang einer aktiven Spaltregelung (92).

9. Gasturbinenmotor (20), aufweisend:
einen Verdichterabschnitt (40, 42);
einen Brennraum (44) stromabwärts des Verdichterabschnitts (40, 42) entlang eines Kernströmungswegs (522); und
einen Turbinenabschnitt (46, 48) stromabwärts des Brennraums (44) entlang des Kernströmungswegs (522) und gekoppelt an den Verdichterabschnitt (40, 42), um den Verdichterabschnitt (40, 42) anzutreiben,
wobei der Motor den Turbinenmotordurchgang nach einem der vorangehenden Ansprüche als einen Luftdurchgang umfasst.

## Revendications

1. Conduit de moteur à turbine comprenant :
une première bride (122) présentant une ouverture (130) ;
une seconde bride (126) présentant une ouverture (132) ; et
un conduit (128) reliant les ouvertures (130, 132), le conduit (62 ; 78 ; 79 ; 84 ; 92) comprenant :
un substrat en polymère (160) ; et
un système de revêtement (162) comprenant :
un placage métallique (164) présentant une épaisseur d'au moins 0,05 mm ; et
un revêtement en polymère (166) au-dessus du placage métallique (164) ; dans lequel :
le système de revêtement (162) comprend le revêtement en polymère (166) au-dessus du placage métallique (164) le long d'une majorité d'une zone de surface intérieure ; et
le long d'une majorité d'une zone de surface extérieure, le système de revêtement comprend le placage métallique (164) sans le revêtement en polymère (166) ; et
dans lequel :
le substrat (160) comprend du polyétherimide ou polyamide thermoplastique ; et
le revêtement en polymère comprend du polyéther éther cétone (PEEK).

2. Conduit de moteur à turbine selon la revendication 1, dans lequel :
le substrat (160) comprend une matrice en polymère et un renforcement ; et
la matrice est un matériau thermoplastique formant une majorité du substrat en poids.

3. Conduit de moteur à turbine selon la revendication 1 ou 2, dans lequel :
le substrat (160) a une épaisseur de 1,27 à 6,35 mm.

4. Conduit de moteur à turbine selon une quelconque revendication précédente, dans lequel :
le placage métallique (164) forme au moins 30 % en poids de l'article.

5. Conduit de moteur à turbine selon une quelconque revendication précédente, dans lequel :
le placage métallique (164) comprend du nickel comme un contenu en poids le plus grand.

6. Conduit de moteur à turbine selon une quelconque revendication précédente, dans lequel :
l'épaisseur de placage métallique (164) est d'au moins 0,25 mm.

7. Conduit de moteur à turbine selon une quelconque revendication précédente, dans lequel :
le revêtement en polymère (166) a une épaisseur de 0,5 à 2,0 mm.

8. Conduit de moteur à turbine selon une quelconque revendication précédente, étant au moins un :
d'un conduit d'entrée de refroidisseur air-huile (78) ;
d'un conduit de sortie de refroidisseur air-huile (79) ;
d'un conduit d'entrée de prérefroidisseur (84) ; et
d'un conduit d'entrée de commande d'espacement actif (92).

9. Moteur à turbine à gaz (20) présentant :
une section de compresseur (40, 42) ;
un brûleur (44) en aval de la section de compresseur (40, 42) le long d'une voie d'écoulement de coeur (522) ; et une section de turbine (46, 48) en aval du brûleur (44) le long de la voie d'écoulement de coeur (522) et couplée à la section de compresseur (40, 42) pour entraîner la section de compresseur (40, 42),
dans lequel le moteur comprend le conduit de moteur à turbine selon une quelconque revendication précédente comme un conduit d'air.
